# EUROPEAN PATENT APPLICATION

(11) **EP 4 742 422 A1**
(43) Date of publication of application: **13.05.2026**
(21) Application number: 25831194.3
(22) Date of filing: 18.06.2025
(51) Int. Cl.: H01M 50/531

(54) **COLLECTOR, BATTERY COMPRISING COLLECTOR, BATTERY PACK COMPRISING BATTERY AND VEHICLE COMPRISING BATTERY PACK**

(30) Priority: 19.06.2024 KR 20240079879
(71) Applicant: LG Energy Solution, Ltd., Seoul 07335 (KR)
(72) Inventor: PARK, Rea-Sun, Daejeon 34122 (KR); KIM, Hee-Jae, Daejeon 34122 (KR); LEE, Je-Jun, Daejeon 34122 (KR)
(74) Representative: Goddar, Heinz J.
(86) International application number: PCT/KR2025/008424
(87) International publication number: WO 2025/263984

(57) **Abstract**

A current collector according to an embodiment of the present disclosure, which is configured to electrically connect a first terminal and an electrode assembly provided in a battery, may include: a first coupling portion configured to be coupled to the first terminal; a second coupling portion configured to be electrically connected to the first coupling portion and coupled to the electrode assembly; and one or more slits formed to extend and surround at least a portion of the second coupling portion such that at least a portion of the second coupling portion is connected to the first coupling portion in a radial direction of the current collector.

## Description

### TECHNICAL FIELD

The present disclosure relates to a current collector, a battery including the current collector, and a battery pack and vehicle including the battery. This application is based on and claims priority from Korean Patent Application No. 10-2024-0079879, filed on June 19, 2024, with the Korean Intellectual Property Office, the disclosure of which is incorporated herein in its entirety by reference.

### BACKGROUND ART

Reducing resistance may be an important technical challenge in batteries. In particular, when applying secondary batteries to devices, minimizing the resistance of the battery itself may be effective in securing a fast charging speed and/or securing excellent output characteristics.

For example, when secondary batteries are applied to devices such as electric vehicles, output improvement and/or charging speed improvement are important factors. In order to realize such output improvement and/or charging speed improvement, it is required to increase the cross-sectional area of the component in the area where the current passes and/or to reduce the current path length.

For example, in secondary batteries, a current collector may be applied for electrical connection between the electrode assembly and other components, but the current path may be lengthened by providing a structure for facilitating the circulation of electrolyte through the current collector and/or a structure for buffering impact applied to the welds between the current collector and other components.

Such an increase in the current path may not be desirable for reducing the resistance of the battery, so a method for reducing the current path of the components applied to the battery is required.

### DISCLOSURE

### Technical Problem

The present disclosure is designed to solve the problems of the related art, and therefore the present disclosure is directed to reducing the current path inside a current collector applied to a battery.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a current collector configured to electrically connect a first terminal and an electrode assembly provided in a battery, which includes: a first coupling portion configured to be coupled to the first terminal; a second coupling portion configured to be electrically connected to the first coupling portion and coupled to the electrode assembly; and one or more slits formed to extend and surround at least a portion of the second coupling portion such that at least a portion of the second coupling portion is connected to the first coupling portion in a radial direction of the current collector.

In addition, the second coupling portion may include a welding portion configured to be welded to the electrode assembly.

In addition, the first coupling portion may be provided in a substantially central area of the current collector.

In addition, the second coupling portion may be provided outward from the first coupling portion in a radial direction of the current collector.

In addition, the slit may be formed to extend in an area excluding a straight path connecting the first coupling portion and the second coupling portion.

In addition, at least a portion of the slit may be formed to extend in the form of a loop that is open at least in a portion between the first coupling portion and the second coupling portion along a radial direction of the current collector.

In addition, the second coupling portion and the slit may be provided in plurality, and at least a portion of each of the plurality of second coupling portions may be surrounded by the plurality of slits.

In addition, the plurality of second coupling portions may be disposed to be spaced apart from each other along a circumferential direction of the current collector.

In addition, the slit may be provided in plurality, and at least some of the plurality of slits may be disposed symmetrically with respect to the second coupling portion.

In addition, the second coupling portion may include a bending portion cut by the slit and configured to be bendable, and the welding portion may be provided in the bending portion.

In another aspect of the present disclosure, there is provided a battery pack including a current collector according to an embodiment of the present disclosure, and a battery.

In another aspect of the present disclosure, there is provided a vehicle including a current collector according to an embodiment of the present disclosure, a battery, and/or a battery pack.

### Advantageous Effects

According to one aspect of the present disclosure, it is possible to reduce the current path inside the current collector applied to the battery, thereby reducing the internal resistance of the battery.

According to another aspect of the present disclosure, as the resistance of the battery is reduced, the output characteristics and/or charging speed of a battery pack and/or vehicle to which the battery is applied can be improved.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery including a current collector according to an embodiment of the present disclosure.
FIG. 2 is a partially cross-sectional view of a battery including a current collector according to an embodiment of the present disclosure.
FIG. 3 is a perspective view of a current collector according to an embodiment of the present disclosure.
FIG. 4 is a plan view of a current collector according to an embodiment of the present disclosure.
FIG. 5 is a plan view of a current collector according to a comparative example of the present disclosure.
FIG. 6 is a perspective view of a current collector according to another embodiment of the present disclosure.
FIG. 7 is a cross-sectional view of a battery including a current collector according to an embodiment of the present disclosure.
FIG. 8 is a partially cross-sectional view of a battery including a current collector according to an embodiment of the present disclosure.
FIG. 9 is a diagram illustrating a battery pack according to an embodiment of the present disclosure.
FIG. 10 is a diagram illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

The sizes of some elements shown in the attached drawings may be exaggerated, instead of reflecting their actual sizes, for convenience of explanation and clarification. In addition, the same reference numerals may indicate the same elements among the embodiments.

Throughout the specification, unless otherwise stated, respective elements may include a single or a plurality of elements.

In addition, the expression "an element is 'connected' or 'coupled' to another element" should be understood that the elements may be directly connected or coupled to each other and that the two elements may be indirectly connected or coupled to each other through a connection member interposed therebetween.

The singular terms used in this specification include the plural terms, unless the context clearly indicates otherwise. In this specification, the expression "an element 'is configured as' or 'includes' other components or steps" should not be construed to mean that the element includes all the components or steps, but rather that the element may exclude some components or steps, or may further include additional components or steps.

Throughout the specification, "A and/or B", unless otherwise stated, may denote A and B, or A or B.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position, arrangement, or rotation of the target object or the position of the observer.

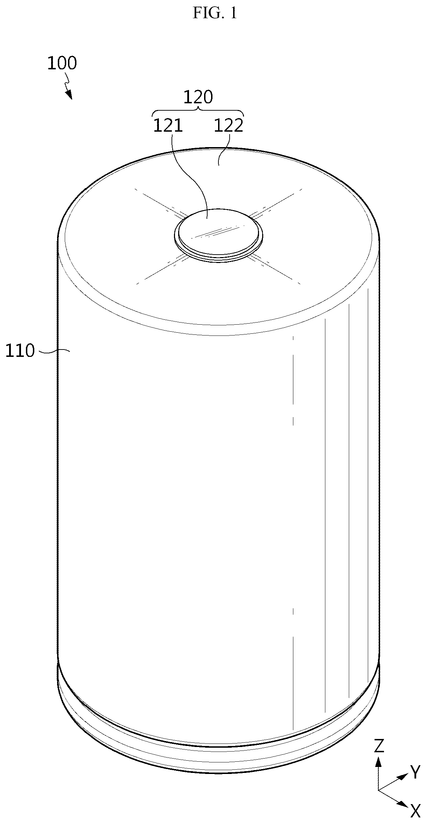

Hereinafter, a current collector according to embodiments of the present disclosure, and a battery, battery pack, and vehicle including the same will be described in detail with reference to FIGS. 1 to 10.

FIG. 1 is a perspective view of a battery including a current collector according to an embodiment of the present disclosure. A battery including a current collector according to an embodiment of the present disclosure will be described below with reference to FIG. 1.

A battery 100 may be, for example, a cylindrical battery. The battery 100 may include a housing 110 and a terminal 120.

The housing 110 may form the exterior of the battery 100 and have an inner space. The housing 110 may include a conductor containing an electrically conductive material such as metal. The housing 110 may include, for example, steel, stainless steel, nickel-plated iron, or the like.

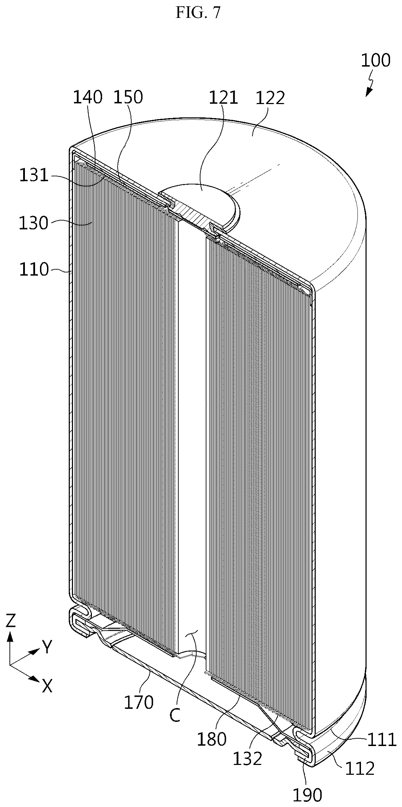

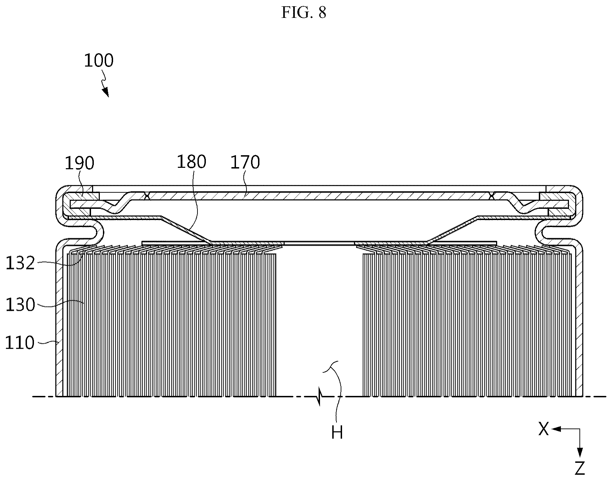

The bottom of the housing 110 may be open and called an opening (see FIGS. 7 and 8). The top of the housing 110 may be closed and called a closed portion. The side surface (outer surface) and the closed portion of the housing 110 may be formed integrally. Alternatively, the side surface and the closed portion of the housing 110 may be provided separately from each other and then coupled to each other by welding or the like. The housing 110 may receive an electrode assembly or electrolyte, which will be described later, through the opening at the bottom.

The terminal 120 may include a first terminal 121 and a second terminal 122. For example, the first terminal 121 may be a positive electrode terminal, and the second terminal 122 may be a negative electrode terminal, or vice versa.

The technical idea of the present disclosure is not limited to the shape of the battery, and may be applied to other shapes of batteries, such as prismatic batteries.

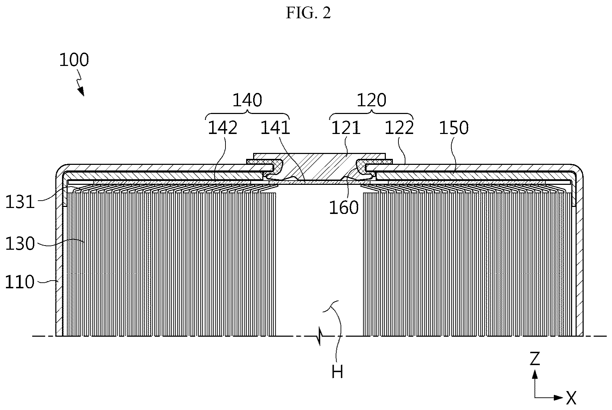

The battery 100 may further include an electrode assembly and a current collector. Hereinafter, the battery 100 including an electrode assembly and a current collector will be described with reference to FIG. 2.

FIG. 2 is a partially cross-sectional view of a battery including a current collector according to an embodiment of the present disclosure. The configuration of the battery 100 including a current collector will be described with reference to FIG. 2 as follows. The description of the above-described configurations will be omitted.

The battery 100 may include a housing 110, a terminal 120, an electrode assembly 130, and a current collector 140.

The electrode assembly 130 may be stored in the inner space of the housing 110. The electrode assembly 130 may include a first electrode and a second electrode. Specifically, the electrode assembly 130 may include a first electrode having a first polarity, a second electrode having a second polarity, and a separator interposed between the first electrode and the second electrode. The first electrode may be either a positive electrode or a negative electrode. The second electrode may have a polarity opposite that of the first electrode.

The terminal 120 described above may be electrically connected to the electrode assembly 130. For example, the first terminal 121 may be electrically conductive and electrically connected to the first electrode of the electrode assembly 130, thereby having the same polarity as the first electrode. The first terminal 121 may be electrically insulated from the housing 110.

The second terminal 122 may be configured as all or part of the housing 110. The housing 110 may be electrically connected to the second electrode. Alternatively, the second terminal 122 may be electrically connected to the second electrode and included in a part of the housing 110.

The electrode assembly 130 may have a jelly-roll structure. The electrode assembly 130 may be formed by winding a laminate formed by stacking a sheet-shaped first electrode and second electrode with a separator interposed therebetween at least once around a winding center hole H. That is, a winding center hole H may be formed at the winding center of the electrode assembly 130. A separator may be disposed between the outer surface of the electrode assembly 130 and the housing 110 for insulation from the housing 110.

Active materials may be applied to areas of the first electrode and the second electrode, and the area where the active material is not applied may be referred to as an uncoated area. For example, a first uncoated area 131 may be formed to extend from one end of the first electrode along the direction in which the electrode assembly 130 is wound.

Referring to FIG. 2, the first uncoated area 131, as a part of the first electrode, may be positioned at the top of the electrode assembly 130 stored in the inner space of the housing 110.

At least a portion of the first uncoated area 131 may include a plurality of segments divided along the winding direction of the electrode assembly 130. In this case, the plurality of segments may be bent toward the radial direction of the electrode assembly 130. The plurality of bent segments may overlap each other in multiple layers. The current collector 140 may be coupled to the first uncoated area 131 in an area where the plurality of segments overlap each other in multiple layers.

The current collector 140 may electrically connect the first electrode and the first terminal 121. Specifically, the current collector 140 may be electrically connected to the first uncoated area 131 and the first terminal 121 so as to electrically connect the first electrode and the first terminal 121.

The connection between the first uncoated area 131 and the current collector 140 may be performed by, for example, laser welding. The laser welding may also be made by partially melting the current collector 140.

The battery 100 may further include an insulator 150. The insulator 150 may be interposed between the current collector 140 and the closed portion of the housing 110. Specifically, the insulator 150 may prevent physical/electrical contact between the current collector 140 and the housing 110 (in particular, the second terminal 122), which have different polarities from each other.

The battery 100 may further include a terminal gasket 160. The terminal gasket 160 may include a non-conductor so as to electrically insulate the first terminal 121 from the housing 110.

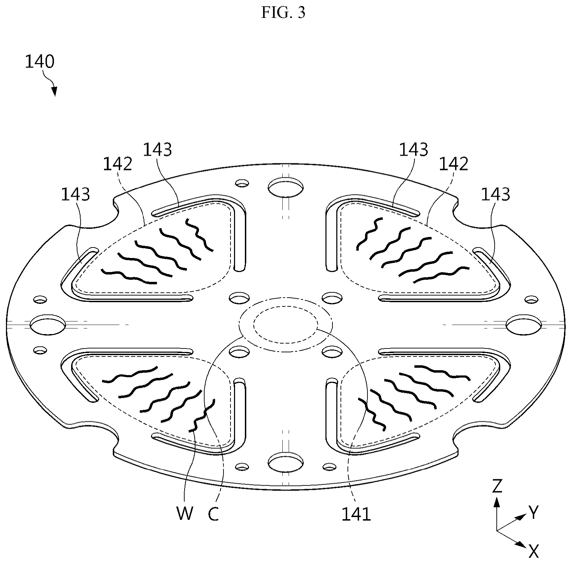

FIG. 3 is a perspective view of a current collector according to an embodiment of the present disclosure. Referring to FIG. 3, the current collector 140 according to an embodiment of the present disclosure will be described as follows.

The current collector 140 may include a conductor, and may be configured to electrically connect the terminal and the electrode assembly provided in the battery. For example, the current collector 140 may be configured to electrically connect the first terminal 121 and the electrode assembly 130 described above with reference to FIG. 2.

The current collector 140 may include a first coupling portion 141, a second coupling portion 142, and a slit 143. The first coupling portion 141 and the second coupling portion 142 may be configured to be coupled to other components of the battery.

The first coupling portion 141 may be electrically coupled to the terminal of the battery. The first coupling portion 141 may be coupled to the terminal of the battery by welding or the like. For example, the first coupling portion 141 may be configured to be coupled to the first terminal 121 described above with reference to FIG. 2.

The second coupling portion 142 may be electrically connected to the first coupling portion. In addition, the second coupling portion 142 may be electrically coupled to the electrode assembly of the battery. The second coupling portion 142 may be coupled to the electrode assembly of the battery by welding or the like. For example, the second coupling portion 142 may be configured to be coupled to the first uncoated area 131 described above with reference to FIG. 2.

For example, the second coupling portion 142 may include a welding portion W to be coupled to another component, such as the electrode assembly 130 of the battery, by welding. The welding portion W may be welded to the electrode assembly 130 or the like. As the welding portion W and the electrode assembly 130 are welded to each other, the second coupling portion 142 and the electrode assembly 130 may be electrically coupled to each other.

The first coupling portion 141 and the second coupling portion 142, as parts of the current collector 140, may be electrically connected to each other. An area of the current collector 140 may function as a path through which the first coupling portion 141 and the second coupling portion 142 are electrically connected. The electrical connection path between the first coupling portion 141 and the second coupling portion 142 may be a part of the current collector 140 including the first coupling portion 141 and the second coupling portion 142.

For example, the electrical connection path between the first coupling portion 141 and the second coupling portion 142 may be another area of the current collector 140, excluding the first coupling portion 141 and the second coupling portion 142, and in this case, the first coupling portion 141 and the second coupling portion 142 may be indirectly connected to each other through another area of the current collector 140.

However, the present disclosure is not limited thereto, and depending on the design, the electrical connection path between the first coupling portion 141 and the second coupling portion 142 may be formed by directly connecting the first coupling portion 141 and the second coupling portion 142.

The slit 143 may be formed by perforating an area of the current collector 140. For example, referring to FIG. 3, the slit 143 may be a hole or gap formed by perforating an area of the current collector 140 in the Z-axis direction.

The slit 143 may be formed to extend from an area of the current collector 140. In the embodiments of the present disclosure, the extension of the slit 143 may indicate that the slit 143, formed by perforating an area of the current collector 140 in the Z-axis direction, extends on the X-Y plane.

The slit 143 may allow a movement of an area of the current collector 140 relative to another area.

The slit 143 may be configured to buffer external impact applied to the current collector 140 or the battery. The current collector 140 may be connected and coupled to other components such as the terminal 120 or the electrode assembly 130, and the connection portion with the terminal 120 or the electrode assembly 130 is likely to be damaged when an impact is applied to the current collector 140. The slit 143 may provide a space in which a partial area of the current collector 140 is able to move when an impact is applied from the outside to the current collector 140, thereby preventing deformation or damage of the current collector 140 and/or other components (e.g., the terminal 120 or the electrode assembly 130) of the battery connected to the current collector 140.

The slit 143 may be configured as a buffer against thermal contraction and thermal expansion applied to the current collector 140. The temperature of the current collector 140 may rise and drop due to charging and discharging of the battery, and thermal expansion or thermal contraction may occur in the current collector 140. The slit 143 may distribute and alleviate stress generated due to thermal expansion and thermal contraction of the current collector 140, thereby preventing deformation or damage of the current collector 140 and/or other components (e.g., the terminal 120 or the electrode assembly 130) of the battery connected to the current collector 140.

In addition, the current collector 140 may provide the effect of reducing the weight and cost of the current collector 140 by including the slit 143.

In addition, the slit 143 may serve to induce the flow of current flowing through the current collector 140 or distribute the density of the current.

In addition, the slit 143 may provide the effect of allowing a specific area of the current collector 140 to be easily bent or folded. The current collector 140 may be likely to be bent or folded during the manufacturing process or by an unexpected external force. The slit 143 may prevent stress concentration on the current collector 140 when the current collector 140 is bent or folded, and may be formed to be easily folded in a predetermined area, thereby improving the processability and stability of the current collector 140 and/or the entire battery.

Referring to FIG. 3, the slit 143 may be formed to extend and surround at least a portion of the second coupling portion 142.

According to the above-implemented configuration, the slit 143 may improve the buffering performance of the component of the current collector 140, especially, the second coupling portion 142.

According to an embodiment of the present disclosure, welding for coupling between the current collector 140 and the electrode assembly may be performed in at least a partial area of the second coupling portion 142 surrounded by the slits 143. Referring to FIG. 3, the area where welding is performed in the second coupling portion 142 may be referred to as a welding portion W.

The welding portion W of the second coupling portion 142 may be welded and coupled to other components such as the electrode assembly 130 described above with reference to FIG. 2. In this configuration, when an impact is applied to the second coupling portion 142, the welding portion W may be damaged, so that the connection between the second coupling portion 142 and the electrode assembly 130 is likely to be damaged. The slit 143 may provide an extra space in which the second coupling portion 142 may move even when an external impact is applied to the second coupling portion 142, thereby preventing deformation or damage of the second coupling portion 142 and/or other components (e.g., the electrode assembly 130 or the like) of the battery connected to the second coupling portion 142.

More specifically, referring to FIG. 3, the second coupling portion 142 may have a degree of freedom to move in the Z-axis direction from the remaining portion of the current collector 140 due to the slit 143. Since the slit 143 is formed in the current collector 140, even when an impact is applied to the battery, the second coupling portion 142 may not be constrained on the same plane as other components of the current collector 140, such as the first coupling portion 141, so that the impact applied to the current collector 140 may be distributed.

In addition, the slit 143 may prevent damage to the second coupling portion 142 due to thermal contraction and thermal expansion applied to the second coupling portion 142. The second coupling portion 142 may be connected to the electrode assembly 130. Therefore, thermal expansion or thermal contraction of the second coupling portion 142 may occur due to the electrode assembly 130 whose temperature rises and falls due to charging and discharging of the battery. The slit 143 may distribute and alleviate stress applied to the second coupling portion 142 due to thermal expansion and thermal contraction, thereby preventing deformation and damage of the second coupling portion 142 and/or other components (e.g., the electrode assembly 130 or the like) of the battery connected to the second coupling portion 142.

In addition, the slit 143 may provide the effect of allowing the electrolyte to flow and circulate smoothly inside the battery.

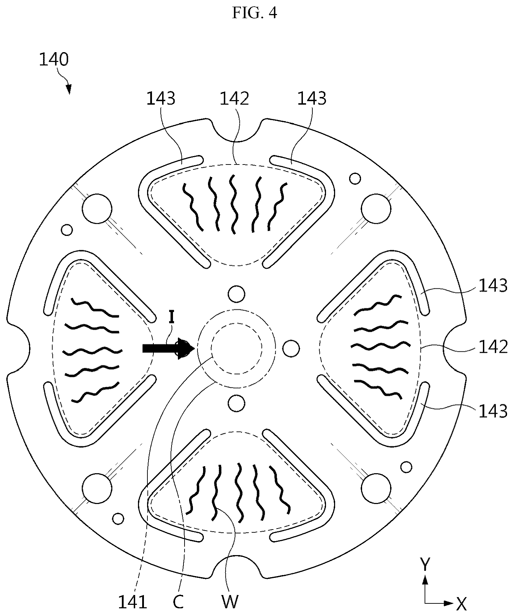

Hereinafter, the current collector 140 according to an embodiment of the present disclosure will be described with further reference to FIG. 4.

FIG. 4 is a plan view of a current collector according to an embodiment of the present disclosure.

Referring to FIGS. 3 and 4, the slit 143 may be formed to extend and surround at least a portion of the second coupling portion 142 such that at least a portion of the second coupling portion 142 is connected to the first coupling portion 141 in the radial direction of the current collector 140. The slit 143 may be formed to extend and surround at least a portion of the second coupling portion 142 such that at least a portion of the second coupling portion 142 is open toward the first coupling portion 141.

For example, referring to FIGS. 3 and 4, the first coupling portion 141 may be provided at a substantially central area C of the current collector 140, and the second coupling portion 142 may be provided outward from the first coupling portion 141 in the radial direction of the current collector 140. The central area C of the current collector 140 may be an area having a predetermined width, which includes the center point of the current collector 140. In this case, the slit 143 may be formed so that at least a portion of the second coupling portion 142 is connected to the first coupling portion 141 at an inward position in the radial direction of the current collector 140. The slit 143 may be disconnected on a path along which at least a portion of the second coupling portion 142 may be connected to the first coupling portion 141 in the radial direction of the current collector 140.

Alternatively, the slit 143 may be formed to extend in an area excluding a straight path connecting the first coupling portion 141 and the second coupling portion 142. The slit 143 may be formed to extend so as not to pass, in the radial direction of the current collector 140, through a path in which the first coupling portion 141 and the second coupling portion 142 are connected in the radial direction of the current collector 140. Specifically, the slit 143 may be formed to extend in an area excluding a straight path connecting the first coupling portion 141 and the second coupling portion 142 in the radial direction of the current collector 140. The straight path connecting the first coupling portion 141 and the second coupling portion 142 may be the shortest path between the first coupling portion 141 and the second coupling portion 142.

Alternatively, the slit 143 may be formed to surround the second coupling portion 142 and extend in the form of a loop that is open at least in a portion between the first coupling portion 141 and the second coupling portion 142 along the radial direction.

In FIG. 4, a path along which current flows is illustrated in a case where the slit 143 is formed to extend so that at least a portion of the second coupling portion 142 may be connected to the first coupling portion 141 in the radial direction of the current collector 140 (see the arrow I).

According to the above-described embodiment, the slit 143 may not be formed on a path connecting the first coupling portion 141 and the second coupling portion 142 in the radial direction of the current collector 140 at an area therebetween, and the current may flow between the first coupling portion 141 and the second coupling portion 142 along the shortest path in the radial direction of the current collector 140.

According to the current collector 140 of an embodiment of the present disclosure, the current may flow through the shortest path between the electrode assembly 130 and the terminal 120 described above with reference to FIGS. 1 and 2, and the internal resistance of the battery 100 may be reduced.

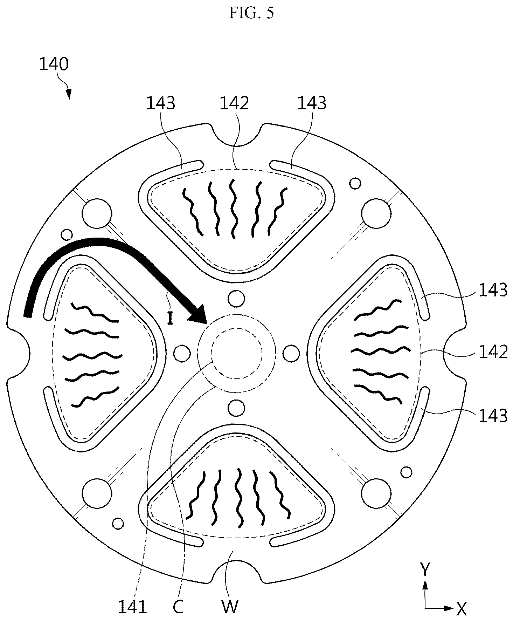

FIG. 5 is a plan view of a current collector according to a comparative example of the present disclosure.

According to the current collector 140 illustrated in FIG. 5, the slit 143 is formed to extend so as to prevent the entire area of the second coupling portion 142 from being connected to the first coupling portion 141 in the radial direction of the current collector 140. That is, the slit 143 illustrated in FIG. 5 is formed to extend so as to block the shortest path between the first coupling portion 141 and the second coupling portion 142.

According to the implemented configuration described with reference to FIG. 5, since the current must flow through the current collector 140 in the same or similar direction as the arrow I shown in FIG. 5, the current may flow to bypass the shortest path between the first coupling portion 141 and the second coupling portion 142, so that the length of the current path through the current collector 140 may increase, which may increase the resistance of the battery.

Referring back to FIG. 4, the current collector 140 according to an embodiment of the present disclosure may include one or more slits 143 surrounding at least a portion of the second coupling portion 142 coupled to the electrode assembly, thereby minimizing an increase in resistance of the current collector 140 due to the slits 143.

In summary, the current collector 140 according to an embodiment of the present disclosure may allow the second coupling portion 142 to move to a certain extent when an external impact, thermal expansion, and/or thermal contraction is applied to the second coupling portion 142, thereby minimizing the risk of damage to the welding portion W or the like, facilitating the electrolyte circulation through the slit 143, and minimizing an increase in resistance of the current collector 140 due to the slit 143.

Although FIGS. 3 and 4 of the present disclosure show the slit 143 that is disconnected in two areas such as an area biased toward the central area C of the current collector 140 and an area biased toward the outside of the current collector 140 in the radial direction of the current collector 140, the slit 143 of the current collector 140 according to the technical idea of the present disclosure is not necessarily limited to such a shape, and the slit 143 formed in the current collector 140 according to the technical idea of the present disclosure may have any shape as long as the slit 143 is disconnected on a path where at least a portion of the second coupling portion 142 may be connected to the first coupling portion 141 in the radial direction of the current collector 140.

Referring to FIG. 3 and FIG. 4, the current collector 140 may have a plurality of second coupling portions 142. In addition, the current collector 140 may also have a plurality of slits 143.

At least a portion of each of the plurality of second coupling portions 142 may be surrounded by the slits 143. The plurality of slits 143 may be formed corresponding to the plurality of second coupling portions 142, respectively.

Since the current collector 140 has a structure in which the plurality of second coupling portions 142 are respectively and physically separated by the slits 143, thereby enhancing the buffering performance against external impact, thermal expansion, and/or thermal contraction applied to each of the second coupling portions 142.

According to the above-implemented configuration, a plurality of separated buffer areas may be formed in one current collector 140, so that the stress applied to one second coupling portion 142 may be effectively prevented from being transmitted to other areas of the current collector 140. Therefore, not only may deformation or damage of the second coupling portion 142 itself be prevented more efficiently, but the risk of damage to other battery components, such as the electrode assembly 130 or the like, connected to the second coupling portion 142 may also be minimized.

As a result, the overall durability and stability of the current collector 140 may be greatly improved by a structure in which the current collector 140 has a plurality of second coupling portions 142 and a plurality of slits 143 formed corresponding thereto.

In a case where a plurality of second coupling portions 142 are provided, the plurality of second coupling portions 142 may be spaced apart from each other along the circumferential direction of the current collector 140.

According to the above-implemented configuration, the current collector 140 may collect current from the electrode assembly 130 more efficiently and distribute the density of the current flowing through the current collector 140, thereby preventing excessive heat from being generated in a specific part of the current collector 140.

A plurality of slits 143 may be provided. At least some of the plurality of slits 143 may be disposed symmetrically with respect to the second coupling portion 142.

Such arrangement of the slits 143 may prevent unbalanced concentration of stress applied to the second coupling portion 142 when an external impact, thermal expansion, and/or thermal contraction is applied to the current collector 140 and enable uniform stress distribution.

Since the slits 143 are symmetrically disposed on each of the plurality of second coupling portions 142, excessive stress concentration or biased deformation in a specific area, which may occur due to the asymmetric arrangement of the slits 143, may be effectively alleviated, and the overall durability and reliability of the current collector 140 may be greatly improved.

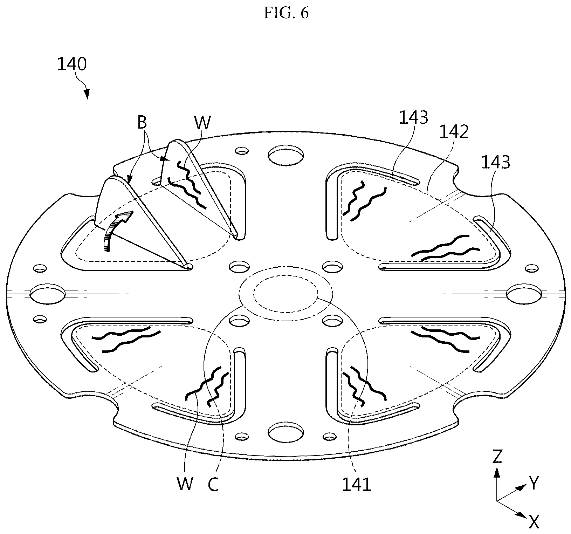

FIG. 6 is a perspective view of a current collector according to another embodiment of the present disclosure. Hereinafter, a current collector 140 according to another embodiment of the present disclosure will be described with reference to FIG. 6.

Referring to FIG. 6, the second coupling portion 142 may have a bending portion B configured to be cut by the slit 143 and bent. For example, one second coupling portion 142 may have two or more bending portions B, but the technical idea of the present disclosure is not limited thereto.

The bending portion B may be an area that is bendable in a direction (Z-axis direction) perpendicular to a plane (X-Y plane) parallel to the current collector 140 in one second coupling portion 142 so as to have a degree of freedom of movement.

Although the bending portion B is illustrated as being bent in the +Z-axis direction in FIG. 6, this is merely exemplary, and the bending portion B may also be bent in the -Z-axis direction depending on the direction of the impact applied to the current collector 130. Furthermore, since the current collector 130 may have a plurality of bending portions B, the respective bending portions B may be bent in different directions from each other.

According to the above-implemented configuration, the bending portion B may be distinguished from the remaining areas inside one second coupling portion 142. At least a portion of the welding portion W may be provided in the bending portion B. With the welding portion W provided in the bending portion B, when an external impact is applied to the current collector 140 or deformation occurs due to thermal expansion and thermal contraction of the current collector 140, the bending portion B may be relatively flexibly deformed by utilizing the degree of freedom of movement secured by the slit 143.

The bending portion B may significantly reduce the risk of damage to the welding portion W by effectively distributing and absorbing stress concentrated on the welding portion W. In addition, the bending portion B may significantly improve the reliability of the welding coupling portion between the current collector 140 and the electrode assembly 130, and contribute to increasing the overall durability and stability of the battery 100.

The welding portion W may also be provided in an area other than the bending portions B in the second coupling portion 142. For example, the welding portion W may be provided in both the bending portion B and the area other than the bending portion B. In this case, the welding portion W provided inside the bending portion B may provide the impact alleviation effect described above, while the welding portion W provided in the area other than the bending portion B, which is located in the area where the first coupling portion 131 and the second coupling portion 132 are connected along the radial direction of the current collector 140, may have the effect of shortening the current path.

In summary, the welding portion W may be provided over the entire second coupling portion 142 so that the welding portion W provided in the bending portion B may have an impact alleviation function, while the welding portion W provided in the area other than the bending portion B may have a function of shortening the current path.

FIG. 7 is a cross-sectional view of a battery including a current collector according to an embodiment of the present disclosure, and FIG. 8 is a cross-sectional view of a lower part of a battery according to an embodiment of the present disclosure.

FIGS. 7 and 8 are cross-sectional views illustrating the opposite side of the battery 100 illustrated in FIG. 2. Therefore, the descriptions of components of the battery 100 that have been described above with reference to FIGS. 1 and 2 will be omitted.

The battery 100 may be a cylindrical battery. The battery 100 may include a housing 110, a terminal 120, an electrode assembly 130, and a current collector 140.

The electrode assembly 130 may further include a second electrode and a second uncoated area 132 that extends from the second electrode. The second electrode may be either a negative electrode or a positive electrode, but is not limited to either one of the two. Therefore, the second uncoated area 132 illustrated in FIGS. 7 and 8 may be either an uncoated area of the negative electrode or an uncoated area of the positive electrode of the electrode assembly 130.

The second uncoated area 132 may be formed at one end of the second electrode constituting the electrode assembly 130. The second uncoated area 132 may extend along the direction in which the electrode assembly 130 is wound.

The second uncoated area 132 may be provided in an area of the electrode assembly 130.

The second current collector 180 may be disposed on one side of the electrode assembly 130. The second current collector 180 may be disposed on the opposite side of the current collector 140, described above with reference to FIG. 1 and FIG. 6, relative to the electrode assembly 130.

The second current collector 180 may be configured to be electrically connected to the housing 110. The second current collector 180 may be configured to electrically connect the electrode assembly 130 and the housing 110. The second current collector 180 may include a conductor having electrical conductivity. For example, the second current collector 180 may have one area electrically connected to the second uncoated area 132, and another area electrically connect to the housing 110, thereby electrically connecting the electrode assembly 130 and the housing 110.

The second current collector 180 may include a terminal coupling portion, an electrode coupling portion, and a connecting portion, similar to the current collector 140 described above with reference to FIGS. 1 to 6. However, the shape, position, or arrangement of the second current collector 180 may be different from that of the current collector 140.

The terminal coupling portion may be an area of the second current collector 180, and may be fixed between the lower portion of the opening gasket 190 and the upper portion of a beading portion where the housing 110 is pressed inward from the outer surface. Furthermore, the terminal coupling portion may be electrically connected to the housing 110.

The electrode coupling portion may be an area of the second current collector 180. At least a portion of the electrode coupling portion may be electrically connected to the second uncoated area 132.

The connection portion may be another area of the second current collector 180, and may be a component connecting the electrode coupling portion and the terminal coupling portion. The connection portion may physically/electrically connect the electrode coupling portion and the terminal coupling portion.

Referring to FIG. 7, the battery 100 may further include a cap 170 fixed to an area of the housing 110. The cap 170 may be configured to be electrically insulated from the electrode assembly 130 and the housing 110 so as not to have polarity. For example, a nonconductive opening gasket 190 may be interposed between the cap 170 and the housing 110. For example, the opening gasket 190 may include, but is not limited to, rubber, silicone, nitrile, polyurethane, and/or fluorocarbon.

The opening gasket 190 may surround the edge of the cap 170 and may be fixed between the cap 170 and the housing 110. The opening gasket 190 may seal the gap between the cap 170 and the housing 110.

Referring to FIG. 7, at least a portion of the second current collector 180 may be interposed and fixed between the lower portion of the opening gasket 190 and the upper portion of the beading portion 111, which is obtained by pressing the outer surface of the housing 110.

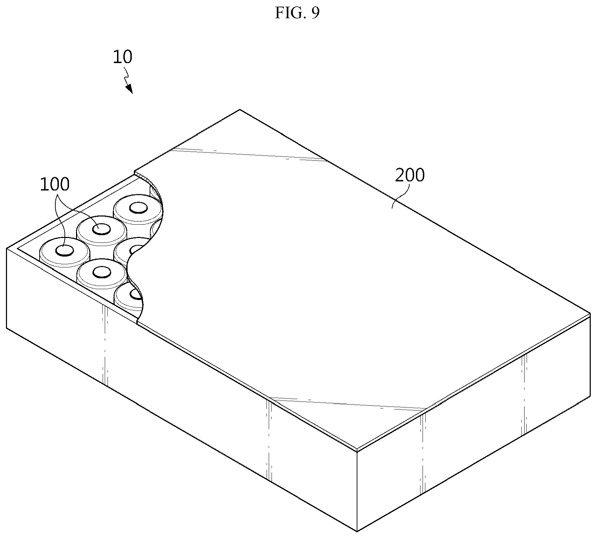

FIG. 9 is a diagram illustrating a battery pack according to an embodiment of the present disclosure.

Referring to FIG. 9, the battery pack 10 according to an embodiment of the present disclosure may include one or more batteries 100 described above with reference to other drawings. In addition, the battery pack 10 may further include components other than the battery 100 according to the present disclosure. For example, the battery pack 10 according to the present disclosure may further include components such as a BMS (Battery Management System), a bus-bar, a relay, and a current sensor.

The battery pack 10 may further include a pack case 200. The pack case 200 may provide a space in which one or more batteries 100 may be stored. In a case where the battery pack 10 includes a plurality of batteries 100, the pack case 200 may include divided spaces to store the plurality of batteries 100.

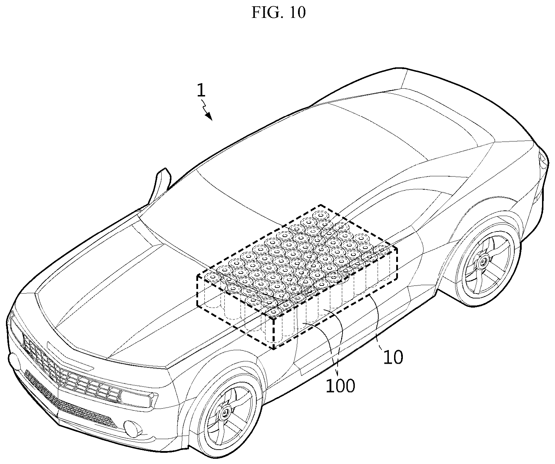

FIG. 10 is a diagram illustrating a vehicle according to an embodiment of the present disclosure.

Referring to FIG. 10, a vehicle 1 may include one or more battery packs 10. For example, the vehicle 1 may be any one of an electric vehicle, a hybrid vehicle, or a plug-in hybrid vehicle, but is not limited thereto. The vehicle 1 may be any one of a four-wheel vehicle and a two-wheel vehicle. The vehicle 1 may run on the power supplied from the battery pack 10 or battery module according to the embodiments of the present disclosure.

Some embodiments or other embodiments of the present disclosure described above are not exclusive or distinct from each other. Some embodiments or other embodiments of the present disclosure described above may be combined in their configurations or functions. For example, configuration A described in a specific embodiment and/or drawing may be combined with configuration B described in another embodiment and/or drawing. That is, even if the combination between the configurations is not directly described, it means that the combination is possible, excluding cases where the combination is described as impossible.

The above detailed description should not be construed as limiting in all respects and should be considered exemplary. The scope of the present disclosure should be determined by a reasonable interpretation of the appended claims, and all changes inside the equivalent scope of the present disclosure are included in the scope of the present disclosure.

## Claims

1. A current collector configured to electrically connect a first terminal and an electrode assembly provided in a battery, the current collector comprising:
a first coupling portion configured to be coupled to the first terminal;
a second coupling portion configured to be electrically connected to the first coupling portion and coupled to the electrode assembly; and
one or more slits formed to extend and surround at least a portion of the second coupling portion such that at least a portion of the second coupling portion is connected to the first coupling portion in a radial direction of the current collector.

2. The current collector according to claim 1,
wherein the second coupling portion comprises a welding portion configured to be welded to the electrode assembly.

3. The current collector according to claim 1,
wherein the first coupling portion is provided in a substantially central area of the current collector.

4. The current collector according to claim 1,
wherein the second coupling portion is provided outward from the first coupling portion in a radial direction of the current collector.

5. The current collector according to claim 1,
wherein the slit is formed to extend in an area excluding a straight path connecting the first coupling portion and the second coupling portion.

6. The current collector according to claim 1,
wherein at least a portion of the slit is formed to extend in the form of a loop that is open at least in a portion between the first coupling portion and the second coupling portion along a radial direction of the current collector.

7. The current collector according to claim 1,
wherein the second coupling portion and the slit are provided in plurality, and
wherein at least a portion of each of the plurality of second coupling portions is surrounded by the plurality of slits.

8. The current collector according to claim 7,
wherein the plurality of second coupling portions are disposed to be spaced apart from each other along a circumferential direction of the current collector.

9. The current collector according to claim 1,
wherein the slit is provided in plurality, and
wherein at least some of the plurality of slits are disposed symmetrically with respect to the second coupling portion.

10. The current collector according to claim 2,
wherein the second coupling portion comprises a bending portion cut by the slit and configured to be bendable, and
wherein at least a portion of the welding portion is provided in the bending portion.

11. A battery comprising:
a current collector of any one of claims 1 to 10;
an electrode assembly electrically connected to the current collector; and
a terminal electrically connected to the current collector.

12. A battery pack comprising
a battery of claim 11.

13. A vehicle comprising a battery pack of claim 12.
